# EUROPEAN PATENT SPECIFICATION

(11) **EP 3 247 559 B1**
(45) Date of publication and mention of the grant of the patent: **25.09.2019**
(21) Application number: 16739711.6
(22) Date of filing: 22.01.2016
(51) Int. Cl.: B32B 27/18, B32B 27/32, B32B 37/00, C08J 3/22, B32B 27/20

(54) **MULTILAYER POLYETHYLENE GEOMEMBRANE LINERS**
MEHRLAGIGE POLYETHYLENGEOMEMBRANAUSKLEIDUNGEN
REVÊTEMENTS EN GÉOMEMBRANE DE POLYÉTHYLÈNE MULTICOUCHE

(30) Priority: 23.01.2015 US 201562106886 P
(43) Date of publication of application: 29.11.2017
(73) Proprietor: Solmax International Inc., Varenne, Québec J3X 1P7 (CA)
(72) Inventor: TAGHIZADEH, Ata, Montreal, Québec H3V 1C7 (CA)
(74) Representative: Cabinet Laurent & Charras
(86) International application number: PCT/CA2016/050051
(87) International publication number: WO 2016/115636

(56) References cited:
- EP-A1- 2 133 367
- WO-A1-2013/007619
- US-A- 5 221 570
- US-A1- 2014 364 545
- US-A1- 2014 364 545
- 'INEOS Metallocene Product Family' INEOS OLEFINS & POLYMERS EUROPE, [Online] October 2013, pages 1 - 16, XP055469161 Retrieved from the Internet: <URL:HTTP://WWW.INEOS.COM/GLOBALASSETS/INEO S-GROUP/BUSINESSES/INEOS-OLEFINS-AND-POLYME RS-EUROPE/BROCHURES/METALLOCENE-TEASER.PDF>
- SCHEIRS, JOHN A GUIDE TO POLYMERIC MEMBRANES: A PRACTICAL APPROACH 27 August 2009, page 77, XP009504978

## Description

### FIELD OF THE INVENTION

The present invention generally relates to geomembrane liners, and more particularly to multilayer polyethylene (PE) geomembrane liners, each layer being made from a specific masterbatch, and to be used under unconventional conditions or applications where regular PE grades liners may not withstand, such as high temperatures.

### BACKGROUND OF THE INVENTION

Due to their ability to minimize advective flow and provide an excellent diffusive barrier to inorganic contaminants, high-density polyethylene (HDPE) geomembranes are extensively used as a part of composite base liner systems in modern landfills. These liner systems often comprise (from top to bottom) a gravel leachate collection layer, a geotextile protection layer, a 1.5 or 2 mm thick HDPE geomembrane, and either a geosynthetic clay liner (GCL) or a compacted clay liner. HDPE geomembranes have been shown to have good chemical resistance to wide range of contaminants found in landfill leachate constituents. The long-term behaviour of geomembranes in landfill base liners is initially controlled by the rate of extraction of antioxidants. This process involves the dissolution or chemical reaction of antioxidants at the surface of the geomembrane and their diffusion from the core structure to the surface due to concentration gradient. The loss of antioxidants leaves the geomembrane vulnerable to the second principal degradation mechanism of oxidative degradation (Rowe R. K. et al.; Journal of geotechnical and geoenvironmental engineering (ASCE) 1090-0241 (2008) 134:1 (68)).

Multilayered coextruded geomembranes have been developed. U.S. patent no. 5,221,570 (Gokcen et al.) discloses geomembranes The geomembrane consists of three or more polymeric layers with outside layers consisting of high density polyethylene at least 0.930 g/cm³ and a very low density polyethylene inner core layer less than or equal to 0.920 g/cm³, providing geomembranes exhibiting enhanced flexibility and ease of handling and welding that is superior to both high density polyethylene and low density polyethylene.

High temperatures accelerate the degradation of the liners. In U.S. patent application no. US 2014/0364545 A1 (Prachoomdang et al.), a specific high temperature geomembrane liner and masterbatch composition is disclosed. The masterbatch composition disclosed by Prachoomdang et al. is made of very specific additives well known in the art such as: antioxidants (Irganox™ 1330; Irganox™ 1010; Irgafos™ 168), UV stabilizers (Hindered amine), acid neutralizer (hydrotalcite) and carbon black. These additives are well known for the making of pipes made of polyolefine and resistant to degradation (see for instance PCT application no. WO 2008/040482 by Hastrand et al.); or other polyolefin articles such as geomembranes (see U.S. patent no. 6,774,170 B2 by Webster).

A first shortcoming of the geomembranes of the prior art is the use of acid neutralizers added to the PE formulation due to the fact that that conventional PE resins comprise some acid residues of the synthesis process such as in Zn-Na catalysts. It has been discovered that by using new generation metallocene catalyzed polyethylene, acid residues are absent and there is not a harmful catalyst residue in the final resin, so there is no need to add an extra additive to neutralize that. New PE metalocene based resins have then been developed to produce new generation of multilayered geomembrane liners.

Another shortcoming of the prior art is generally mitigated by the use of various unnecessary additives which will increase the cost of the products.

Another shortcoming is the use of all of the additives in the whole body of the geomembrane because of its single layer structure. In addition in some exposed conditions for this materials, since the contacting liquid or solid will have high temperatures, the presence of an additional radiation heat source i.e. sunlight is not favorable. To diminish the effect of sunlight, application of reflective pigments is preferred.

### SUMMARY OF THE INVENTION

In this invention, a new multilayer structure has been designed to address several problems known in the art such as fast degradation of the membrane under unconventional conditions or applications where regular monolayer PE grades liners cannot withstand, such as high temperatures up to 100 °C.

The invention is first directed to multilayer polyethylene (PE) geomembrane liner comprising a number N of co-extruded stacked layers with N ≥ 2, preferably with N≥ 3, each layer being made from:
a given amount of a PE masterbatch composition comprising a PE resin and additives, and
a given amount of a PE metallocene based resin; the PE metallocene based resin being free of acid neutralizer compounds.

The invention is also directed to a method for the making of a multilayer polyethylene (PE) geomembrane liner according to claim 11, the liner comprising a number N of co-extruded stacked layers with N ≥ 2; preferably with N≥ 3, the method comprising the steps of:
a) mixing a given amount of a first PE masterbatch composition of a PE resin and additives, the PE masterbatch composition being free of acid neutralizer compounds with a first PERT metallocene based resin grade to form a first PE formulation;
b) repeating step a) (N-1) times to form (N-1) PE formulations; and
c) co-extruding the N PE formulations formed in steps a) and b) to form the multilayer polyethylene (PE) geomembrane liner.

The invention is further directed to customized multilayer polyethylene (PE) geomembrane liner comprising a number N of co-extruded stacked layers with N ≥ 2, preferably with N≥ 3, each layer being made from:
a PE masterbatch composition comprising a PE resin and additives, and
a PE metallocene based resin; the PE metallocene based resin being free of acid neutralizer compounds;
wherein at least two of the N layers comprise specific additives that are either different in nature or in combination in order to provide a geomembrane liner having at least two layers with different behavioral properties.

The invention is also directed to a method for the making of a customized multilayer polyethylene (PE) geomembrane liner, the liner comprising a number N of co-extruded stacked layers with N ≥ 2, the method comprising the steps of:
a) mixing a given amount of a PE masterbatch composition comprising a PE resin and additives, with a given amount of polyethylene of raised temperature (PERT) metallocene based resin to form a PE formulation;
b) repeating step a) (N-1) times to form (N-1) PE formulations; and
c) co-extruding the N PE formulations formed in steps a) and b) to form the multilayer polyethylene (PE) geomembrane liner;
wherein at least one of the N PE formulations comprise at least one specific additive presenting a nature and/or a concentration selected in function of a final utility of the geomembrane liner in order to customize the geomembrane liner.

The invention is also directed to lined containment system comprising at least one customized multilayer polyethylene (PE) geomembrane liners as defined herein or made using the methods as defined herein.

In accordance with a preferred embodiment, the masterbatch composition disclosed herein can be added to other polyolefin products to get high resistance for aging in oven and liquid immersion.

The geomembrane liners produced comprising of the above mentioned ingredients can be used but not limited to the unconventional applications such as bioreactors landfills, hot liquid storage, coal seam gas brine ponds, geothermal waste water ponds, or the like.

The method disclosed herein may be a customized or modular method for providing specific liners in accordance with specific requirements. The adaptable structure of the multilayer liner disclosed herein will allow the manufacturer to design targeted formulations at each layer. For instance, in a 3 layer structure where the outer layers counts for 5% of the thickness, the layer which is not in contact with heat source does not necessarily need to be boosted by high performance additives and regular additives will fulfill the requirements. Also, as an example, the same structure will allow incorporation of reflective pigments on the layer which fronts onto sunlight and still keep the cost reasonable enough. Other configurations can be provided without departing from the invention as disclosed herein.

Most of the aging tests introduced so far for the geomembranes are aging in hot air circulating oven. But most of the time, the heat source in contact with the liner is in liquid form. The oxidation behaviour of the geomembranes in a gas or a liquid medium can be totally different. The antioxidants are shown to deplete faster in liquid medium than in air due to various reasons (see e.g. Sangan H. P. et al., Can. Geotech. J., 39: 1221 - 1230 (2002)). In accordance with a preferred embodiment, the multilayer PE geomembrane liner disclosed herein will retain 80% of its high pressure OIT (ASTM 5885) after 6 months and 80% of its selected mechanical properties (ASTM D638) after 6 months immersion in a liquid bath at 80°C (ASTM 5322 modified).

Other and further aspects and advantages of the present invention will be better understood upon reading of the illustrative embodiments about to be described and various advantages not referred to herein will occur to one skilled in the art upon employment of the invention in practice.

### BRIEF DESCRIPTION OF THE DRAWINGS

The above and other aspects, features and advantages of the invention will become more readily apparent from the following description, reference being made to the accompanying drawings in which:

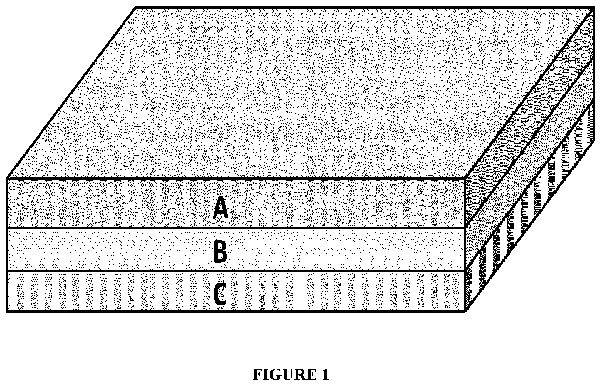

Figure 1 is a schematic illustration of a multilayer geomembrane liner in accordance with a preferred embodiment of the present invention.

### DETAILED DESCRIPTION OF PREFERRED EMBODIMENTS

A novel multilayer polyethylene geomembrane liner for unconventional conditions will be described hereinafter. Although the invention is described in terms of specific illustrative embodiments, it is to be understood that the embodiments described herein are by way of example only and that the scope of the invention is not intended to be limited thereby.

The terminology used herein is in accordance with definitions set out below.

As used herein % or wt.% means weight % unless otherwise indicated. When used herein % refers to weight % as compared to the total weight percent of the phase or composition that is being discussed.

By "about", it is meant that the value of weight %, time, pH or temperature can vary within a certain range depending on the margin of error of the method or device used to evaluate such weight %, time, pH or temperature. A margin of error of 10% is generally accepted.

In accordance with a preferred embodiment a multilayer polyethylene (PE) geomembrane liner (hereafter also named "liner") is disclosed. The liner may comprise at least two adjacent layers, each layer being made from different PE masterbatch composition, each PE masterbatch comprising at least one additive providing at least one behaviour property to the layer. As illustrated on Figure 1, the number of layers may be three, but the invention is not limited to a specific number of layers for the making of the liner.

The multilayer polyethylene (PE) geomembrane liner comprises a number N of co-extruded stacked layers with N ≥ 2, more preferably N is equals or superior to 3. Each layer is made from:
a given amount of a PE masterbatch composition comprising a PE resin and additives, and
a given amount of a PE metallocene based resin; the PE metallocene based resin being free of acid neutralizer compounds.

In accordance with a preferred embodiment, at least one of said additives is selected for providing at least one specific behaviour property to the liner. At least two of the N layers may comprise additives different in nature and/or concentration in order to provide a customized geomembrane liner having at least two layers with different behaviour properties. Examples of specific additives and behaviours are given hereinafter.

In accordance with a preferred embodiment, each layer of the multilayer polyethylene (PE) geomembrane liner may comprise:
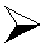 from 5% to 15% of the PE masterbatch composition comprising:
   from about 50 to about 90 wt.% of a PE resin,
   from about 0.1 to about 4 wt.% of a phenolic antioxidant, and
   from about 0.05 to about 3 wt.% of a secondary phosphite antioxidant;
   from about 0 to 5 wt.% of at least one UV stabilizer, and up to 50 wt.% of at least one specific additive;
   wherein the percentages by weight add up to 100% and are based on the total weight of the PE masterbatch composition; and
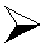 from about 85 to about 95% of a base resin composition comprising polyethylene of raised temperature (PERT) metallocene based resin or its blend with other PE grades;
wherein the percentages by weight add up to 100% and are based on the total weight of the geomembrane composition.

In accordance with a preferred embodiment, the PE resin in the PE masterbatch may have a density of about 0.910 to about 0.960 g/cm³. Also, the PE resin in the PE masterbatch may be selected from the group consisting Linear Low Density PE (LLDPE), Low Density PE (LDPE), Medium Density PE (MDPE) and High Density PE (HDPE), optionally within a metallocene grade category, and optionally in the PERT family. A primary and secondary antioxidants package and some other additives such as carbon black or TiO₂ can be added for process and long term stabilisation.

In accordance with a preferred embodiment, the main matrix resin used in this invention is polyethylene of raised temperature (PERT) metallocene based resin. Specific molecular characteristics of this category of polyethylene allow them to maintain their mechanical properties at temperatures as high as 100°C.

In accordance with a preferred embodiment, geomembrane production out of PE resin is disclosed. The ingredients of each layer of the liner (Fig. 1) may include a master batch of different additives plus the discussed base PERT resin where the master batch is added to the polyethylene resin in an extrusion process.

In accordance with a preferred embodiment, the main resin used for the making of liners should be a polyethylene of raised temperature (PERT) categorised resin such as Daelim XP9000™ (Daelim. South Korea), LG SP980™ (LG Chemicals, South Korea), etc. Though in certain conditions and in certain layers a blend of regular PE resin can also be incorporated. Obviously the grade content and the layer in which this blend can be used should be determined in a way that it does not deteriorate the mechanical and thermal properties mentioned of the final product.

In accordance with a preferred embodiment, a stabilizer package may include any combination of one or more of below ingredients:
1) UV stabilizers functioning as free radical scavengers in Hindered Amine Light Stabilizer ("HALS") family (e.g., Chimmasorb 2020™ (BASF, Germany));
2) antioxidants functioning as inhibitors of thermo-oxidative degradation at a broad temperature range for long-term thermal stabilizers in hindered phenolic family (e.g., Irganox 1010™ (BASF, Germany), which is a sterically hindered phenolic antioxidant);
3) process or thermal stabilizers functioning as inhibitors of thermo-oxidative degradation during extrusion process in comprising a phosphite processing stabiliser (e.g., Irgafos 168™ (BASF, Germany)); and/or
4) Carbon black as UV absorber where the Carbon black is a furnace carbon black with particle size equal or below N660; or
5) TiO₂ with particle size of 100 nm and more.

In accordance with a preferred embodiment, all of the layers comprise at least one of the above mentioned additives.

Including all of the additives in all layers will escalate the final cost and make it overpriced for some certain applications. To address this problem, in accordance with a preferred embodiment, only the most important layers which are in close proximity of the heat source are fortified by high molecular weight HALS and the rest of the layers are only protected by conventional antioxidants such as Irganox B225™ which is a blend of Irganox 1010™ and Irgafos 168™.

The use of carbon black in exposed conditions will cause increasing the temperature of the liner under sun. The use of TiO₂ in the outer layer will help the liner retain its Physical-thermal-mechanical properties for longer times due to its light reflection properties.

In accordance with a preferred embodiment, the composition of the final product will be about 5 to about 15 wt.% of masterbatch and about 85 to about 95 wt.% of main matrix PERT material or its blends in each layer based on the total weight of the geomembrane liner.

In accordance with a preferred embodiment, the PE masterbatch composition is free of hydrotalcite as acid neutralizer compound.

In accordance with a preferred embodiment, the liner can be laminated or coextruded with a sub-layer, the sub-layer being adapted to be electrically conductive whereby, in use, integrity of the liner is monitored electrically. The sub-layer may be a coating of the liner using carbon black.

In accordance with a preferred embodiment, it is also disclosed a formulation for preparing a multilayer polyethylene geomembrane for various applications where each layer comprises of a) a master batch; and b) a base polyethylene resin. Said composition comprises:
i) about 5-15% of a masterbatch composition including all or some of the following components:
   a. about 50-90% of a polyethylene resin (LLDPE, MDPE, HDPE, PERT) with a density of 0.910 to 0.960 g/cm³;
   b. about 0.1 to about 4 wt % of a phenolic antioxidants, wherein said antioxidant may include pentaerythritol tetrakis(3-(3,5-di-tert-butyl-4-hydroxyphenyl)propionate);
   c. about 0.05 to about 3 wt % of a secondary phosphite antioxidant such as Tris(2,4-ditert-butylphenyl)phosphite;
   d. about 0.05 to about 5 wt% of a UV stabilizer of high molecular weight hindered amines (HALS) family such as 1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine; and
   e. about 20-50 wt % of a Carbon black, wherein the said carbon black is a furnace carbon black; wherein the percentages by weight add up to 100% and are based on the total weight of the master batch composition; and
ii) about 85 to 95% of a base resin composition comprising polyethylene of raised temperature (PERT) base resin or its blend with other PE grades, wherein the percentages by weight add up to 100% and are based on the total weight of the geomembrane composition.

The geomembrane liners produced comprising of the above mentioned ingredients can be used but not limited to the unconventional applications such as bioreactors landfills, hot liquid storage, coal seam gas brine ponds, geothermal waste water ponds, or the like.

As aforesaid, the invention is also a method for the making of a multilayer polyethylene (PE) geomembrane liner. The liner comprising a number N of co-extruded stacked layers with N ≥ 2; preferably N ≥ 3. The method comprises at least the following steps of:
a) mixing a given amount of a first PE masterbatch composition of a PE resin and additives, the PE masterbatch composition being free of acid neutralizer compounds with a first PERT metallocene based resin grade to form a first PE formulation;
b) repeating step a) (N-1) times to form (N-1) PE formulations; and
c) co-extruding the N PE formulations formed in steps a) and b) to form the multilayer polyethylene (PE) geomembrane liner.

In accordance with a preferred embodiment, the method may further comprise the step of laminating or coextruding the liner with a sub-layer, the sub-layer being adapted to be electrically conductive whereby, in use, integrity of the liner is monitored electrically. Preferably, the sub-layer may be formed by coating the liner using carbon black. Other coating known in the art can be used.

Additionally, in accordance with a preferred embodiment, the multilayer geomembrane liners disclosed herein can also be textured. The most widely spread technology to manufacture textured geomembranes involves co-extrusion of the polyethylene in three layers, wherein :
- in the central layer, the polymer is extruded in a similar manner than a smooth geomembrane, which gives the material its key functional properties such as watertightness or low gas permeability;
- on the outer layers, a mixture of polyethylene and nitrogen is extruded. When this melted mixture comes out of the die, the nitrogen is expulsed out of the polyethylene, making 'bubbles' that will create the texture of the geomembrane as they solidify.

In accordance with a preferred embodiment, it is thus possible to control the asperity height of the geomembrane - and thus the friction properties - at the time of manufacture by controlling various extrusion parameters such as the percentage of nitrogen in the mixture or the temperature of the polymer / of the air in the vicinity of the die.

As aforesaid, the present invention also concerns a customized multilayer polyethylene (PE) geomembrane liner. By "customized", it is understood that the final liner will be adapted to the final use which can be dictated by several conditions (geography, weather conditions; nature of the liquids to be retained by the liner, etc).

The customized multilayer polyethylene (PE) geomembrane liner according to the invention comprises a number N of co-extruded stacked layers with N ≥ 2. Each layer are made from a given amount of a PE masterbatch composition comprising a PE resin and additives, and a given amount of a PE metallocene based resin; the PE metallocene based resin being free of acid neutralizer compounds. The PE masterbatch composition comprises at least one specific additive providing at least one specific behaviour property to the layer; wherein at least two of the N layers comprise a different specific additive in order to provide a geomembrane liner having at least two layers with different behaviour property.

A method for the making of a customized multilayer polyethylene (PE) geomembrane liner is also disclosed. The liner comprises a number N of co-extruded stacked layers with N ≥ 2, and the method comprises at least the following steps of:
a) mixing a given amount of a PE masterbatch composition comprising a PE resin and additives, with a given amount of polyethylene of raised temperature (PERT) metallocene based resin to form a PE formulation;
b) repeating step a) (N-1) times to form (N-1) PE formulations; and
c) co-extruding the N PE formulations formed in steps a) and b) to form the multilayer polyethylene (PE) geomembrane liner;
wherein at least one of the N PE formulations comprise at least one specific additive presenting a nature and/or a concentration selected in function of a final utility of the geomembrane liner in order to customize the geomembrane liner.

In accordance with a preferred embodiment, N ≥ 3 and at least two of the N layers comprise different specific additives.

Apparatus for the mixing and extrusion steps are those known in the art of making co-extruded membranes. It is also understood that the preferred embodiments detailed herein above apply for the customized liner and method for making the same.

Lined containment systems comprising at least one customized or un-customized multilayer polyethylene (PE) geomembrane liner are also part of the present invention. The different liners are assembled in accordance with techniques known in the art of lined containment systems.

### EXAMPLES

An example of a multilayer geomembrane structure is illustrated on Figure 1, where three different layers identified as layers A, B and C are disclosed, each layers can have different thickness and different formulations. Different ranges of thickness percentages are mentioned in Table 1 below, but the invention cannot be limited to any specific layer thicknesses. Also the total thickness of each multilayer geomembrane liner may vary in function of its use for unconventional applications.

The geomembrane liners disclosed herein have a water-bath aging performance for 6 months immersion at 80°C per ASTM D5322 (modified) such that 80% of high pressure OIT value retained per ASTM D5885. ASTM D5322 is the standard practice for immersion procedure for evaluating the chemical resistance of geosynthetics to liquids. By "modified", it is understood that the standard is performed using water instead of chemicals. Details for the Standard ASTM D5322 are available at http://www.astm.org/Standards/D5322.htm, the content of which is incorporated herewith by reference. The geomembrane liners disclosed herein have also a water-bath aging performance for 6 months immersion at 80°C per ASTM D5322 (modified) such that 80% of tensile properties per ASTM D638.

### Example 1:

The ingredients to be used in the three masterbatches (see Table 1) for the geomembrane in Figure 1 are as follow:

**TABLE 1**

| **Masterbatch ingredients** | **Layer C wt %** | **Layer B wt %** | **Layer A wt %** |
|---|---|---|---|
| PE metallocene grade (LG Lucene™ SP980) | 65.75 | 64.5 | 64.5 |
| Carbon Black N 550 | 31.25 | 31.25 | 0 |
| TiO₂ (Ti-pure© by Dupont) | 0 | 0 | 31.25 |
| Irganox™ 1010 | 1.5 | 1.5 | 1.5 |
| Irgafos 168 | 1.5 | 1.5 | 1.5 |
| Chimmasorb 2020 | 0 | 1.25 | 1.25 |
| **Thickness (%)** | **1-10** | **80-98** | **1-10** |

**TABLE 2**

| **Geomembrane ingredients** | **wt %** |
|---|---|
| PERT resin (Daelim™ XP9020) | 92 |
| Masterbatch formula for each layer | 8 |

Blending each masterbatch A, B and C of Table 1 with a PERT resin in accordance with the proportions of Table 2 followed by extrusion of the same, will result in a three layer geomembrane according to one example of the present invention.

### Example 2: Water immersion testing

In this test, the geomembrane was prepared according to the masterbatch formulation of Table 1 and the geomembrane composition of Table 2 with Daelim™ XP9020 as the base PERT resin (GMB-U).

For the purpose of comparison, another commercial geomembrane of the same thickness has been prepared (GMB-R) (regular HD geomembrane of Solmax based on the GRI GM13 standard). Both of these geomembranes were immersed in a water bath at 80 °C (or 176 °F) according to ASTM D 5322 for 180 days. Since the HP_OIT test is an indicator of the protective antioxidants necessary to protect the geomembrane in its service life, the HPOIT (ASTM D5885-6) of these products were measured before and after this period. Percent retention of this property will show the remaining amount of the antioxidants and light stabiliser additives in the geomembrane (Table 3).

**Table 3**

| *Geomembrane* | *HPOIT Initial (min)* | *HPOIT After 180 days (min) Aging at water bath at 80°C* | *% Retained* |
|---|---|---|---|
| GMB-U | 1100 | 1045 | 95 |
| GMB-R | 965 | 625 | 65% |

In most of the geomembrane applications, the liner is in contact with a liquid phase at various temperatures. Since it is known that the aging phenomenon is different in air and in liquid medium, this test is of more value for real service life calculation of the geomembranes than the regular GRI-GM13 oven aging tests. Today there are some complementary test methods such as EPA 9090 which are designed for testing the compatibility of the liners in different liquid media. The inventive geomembrane demonstrated better retention in a liquid medium than the conventional geomembranes.

While illustrative and presently preferred embodiments of the invention have been described in detail hereinabove, it is to be understood that the inventive concepts may be otherwise variously embodied and employed and that the appended claims are intended to be construed to include such variations except insofar as limited by the prior art.

## Claims

1. A multilayer polyethylene (PE) geomembrane liner to be used in temperatures up to 100 °C and comprising a number N of co-extruded stacked layers with N ≥ 2, each layer being made from:
a given amount of a PE masterbatch composition comprising a PE resin and additives, the PE masterbatch being free of acid neutralizer, and
a given amount of a PE metallocene based resin, the PE metallocene based resin being part of the family of Polyethylene Resin of Raised Temperature or PERT.

2. The multilayer polyethylene (PE) geomembrane liner of claim 1, wherein N ≥ 3.

3. The multilayer polyethylene (PE) geomembrane liner of claim 1, wherein each layer comprises:
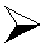 from 5% to 15% of the PE masterbatch composition comprising:
from about 50 to about 90 wt.% of the PE resin,
from about 0.1 to about 4 wt.% of a phenolic antioxidant,
from about 0.05 to about 3 wt.% of a secondary phosphite antioxidant,
from about 0 to 5 wt.% of at least one UV stabilizer, and
up to 50 wt.% of at least one specific additive,
wherein the percentages by weight add up to 100% and are based on the total weight of the PE masterbatch composition; and
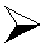 from about 85 to about 95% of the PE metallocene based resin or its blend with other PE grades,
wherein the percentages by weight of the PE masterbatch composition and the PE metallocene based resin or its blend with other PE grades together add up to 100% of the total weight of the multilayer (PE) geomembrane liner.

4. The multilayer polyethylene (PE) geomembrane liner of claim 3, wherein the PE resin in the PE masterbatch has a density of 0.910 to 0.960 g/cm³.

5. The multilayer polyethylene (PE) geomembrane liner of claim 3 or 4, wherein the PE resin in the PE masterbatch is selected from the group consisting of Linear Low Density PE (LLDPE), Low Density PE (LDPE), Medium Density PE (MDPE) and High Density PE (HDPE), optionally within a metallocene grade category, and optionally in the PERT family.

6. The multilayer polyethylene (PE) geomembrane liner of any one of claims 3 to 5, wherein the PE metallocene based resin is a Metallocene - Medium Density Polyethylene resin having a density of about 0.941 g/cm³ according to the test method ASTM D1505, or a Metallocene - Medium Density Polyethylene resin having a density of about 0.938 g/cm³ according to the test method ASTM D1505.

7. The multilayer polyethylene (PE) geomembrane liner of any one of claims 3 to 6, wherein the UV stabilizer is selected from high molecular weight hindered amines (HALS).

8. The multilayer polyethylene (PE) geomembrane liner of any one of claims 3 to 7, wherein the at least one specific additive is selected from Carbon black and TiO₂ particles.

9. The multilayer polyethylene (PE) geomembrane liner of any one of claims 1 to 8, wherein the PE masterbatch composition is free of hydrotalcite.

10. The multilayer polyethylene (PE) geomembrane liner of any one of claims 1 to 9, wherein the liner is laminated or coextruded with a electrically conductive sub-layer.

11. A method for the making of a multilayer polyethylene (PE) geomembrane liner to be used in temperatures up to 100 °C, the liner comprising a number N of co-extruded stacked layers with N ≥ 2, the method comprising the steps of:
a) mixing a PE masterbatch composition comprising a PE resin and additives, the PE masterbatch composition being free of acid neutralizer compounds, with a PE metallocene based resin, the PE metallocene based resin being part of the family of Polyethylene Resin of Raised Temperature or PERT to form a first PE formulation;
b) repeating step a) (N-1) times to form (N-1) PE formulations; and
c) co-extruding the first PE formulation formed in step a) with the (N-1) PE formulations formed in step b) to form the multilayer polyethylene (PE) geomembrane liner.

12. A customized multilayer polyethylene (PE) geomembrane liner to be used in temperatures up to 100 °C and comprising a number N of co-extruded stacked layers with N ≥ 2, each layer being made from:
a PE masterbatch composition comprising a PE resin and additives, the PE masterbatch being free of acid neutralizer; and
a PE metallocene based resin, the PE metallocene based resin being part of the family of Polyethylene Resin of Raised Temperature or PERT;
wherein at least two of the N layers comprise specific additives that are either different in nature or in concentration in order to provide a geomembrane liner having at least two layers with different behavioral properties.

13. A method for the making of a customized multilayer polyethylene (PE) geomembrane liner to be used in temperatures up to 100 °C, the liner comprising a number N of co-extruded stacked layers with N ≥ 2, the method comprising the steps of:
a) mixing a PE masterbatch composition comprising a PE resin and additives, the PE masterbatch being free of acid neutralizer, with a metallocene based resin, the PE metallocene based resin being part of the family of Polyethylene Resin of Raised Temperature or PERT, to form a PE formulation;
b) repeating step a) (N-1) times to form (N-1) PE formulations; and
c) co-extruding the first PE formulation formed in step a) with the (N-1) formulations formed in step b) to form the multilayer polyethylene (PE) geomembrane liner,
wherein at least one of the (N-1) PE formulations comprises at least one specific additive presenting a nature and/or a concentration selected in function of a final utility of the geomembrane liner in order to customize the geomembrane liner.

## Patentansprüche

1. Mehrlagige Polyethylengeomembranauskleidungen (PE) zum Einsatz bei Temperaturen bis 100 °C, die eine Anzahl N co-extrudierter, gestapelter Schichten mit N≥2 enthält, wobei jede Schicht hergestellt ist aus:
einer vorgegebenen Menge einer PE-Masterbatch-Zusammensetzung, die ein PE-Harz und Additive enthält, wobei der PE-Masterbatch frei von säureneutralisierenden Verbindungen ist, und
einer vorgegebenen Menge eines Harzes auf PE-Metallocen-Basis, das zur Familie des Polyethylens mit erhöhter Temperaturbeständigkeit oder PE-RT gehört.

2. Mehrlagige Polyethylengeomembranauskleidungen (PE) nach Anspruch 1, worin N≥3.

3. Mehrlagige Polyethylengeomembranauskleidungen (PE) nach Anspruch 1, worin jede Schicht umfasst:
> zwischen 5% bis 15% der PE-Masterbatch-Verbindung, umfassend:
zwischen ungefähr 50 bis ungefähr 90 Gew.% des PE-Harzes,
zwischen ungefähr 0,1 bis ungefähr 4 Gew.% eines phenolischen Antioxidans,
zwischen ungefähr 0,05 bis ungefähr 3 Gew.% eines sekundären Phosphitantioxidans,
zwischen ungefähr 0 bis 5 Gew.% mindestens eines UV-Stabilisators und
bis zu 50 Gew.% mindestens eines spezifischen Additivs.
wobei sich die Gewichtsprozentsätze auf 100% summieren und auf dem Gesamtgewicht der PE-Masterbatch-Zusammensetzung basieren; und
> zwischen ungefähr 85% bis ungefähr 95% des Harzes auf PE-Metallocen-Basis oder seiner Mischungen mit anderen PE-Gehalten,
wobei die Gewichtsprozentsätze der PE-Masterbatch-Zusammensetzung und der des Harzes auf PE-Metallocen-Basis oder seinen Mischungen mit anderen PE-Gehalten sich auf 100% des Gesamtgewichtes der mehrlagigen Geomembranauskleidung (PE) summieren.

4. Mehrlagige Polyethylengeomembranauskleidungen (PE) nach Anspruch 3, wobei das PE-Harz im PE-Masterbatch eine Dichte von 0.910 bis 0.960 g/cm³ hat.

5. Mehrlagige Polyethylengeomembranauskleidungen (PE) nach Anspruch 3 oder 4, wobei das PE-Harz im PE-Masterbatch aus der Gruppe ausgewählt wird, die aus linearem PE niedriger Dichte (LLDPE), PE niedriger Dichte (LDPE), PE mittlerer Dichte (MDPE) und PE hoher Dichter (HDPE), optional innerhalb einer Metallocengrad-Klasse, und optional innerhalb der PERT-Familie besteht.

6. Mehrlagige Polyethylengeomembranauskleidungen (PE) nach einem der Ansprüche 3 bis 5, wobei es sich bei dem Harz auf PE-Metallocen-Basis um ein Metallocen-Polyethylen mittlerer Dichte, mit einer Dichte zwischen 0,941 g/cm³ gemäß der Testmethode ASTM D1505, oder um ein Metallocen-Polyethylenharz mittlerer Dichte, mit einer Dichte zwischen 0,938 g/cm³ gemäß der Testmethode ASTM D1505 handelt.

7. Mehrlagige Polyethylengeomembranauskleidungen (PE) nach einem der Ansprüche 3 bis 6, wobei der UV-Stabilisator aus den gehinderten Aminen mit hohem Molekulargesicht (HALS) ausgewählt wird.

8. Mehrlagige Polyethylengeomembranauskleidungen (PE) nach einem der Ansprüche 3 bis 7, wobei das mindestens eine spezifische Additiv ausgewählt wird aus Russ- und TiO₂-Teilchen.

9. Mehrlagige Polyethylengeomembranauskleidungen (PE) nach einem der Ansprüche 1 bis 8, wobei die PE-Masterbatch-Zusammensetzung Hydrotalcit frei ist.

10. Mehrlagige Polyethylengeomembranauskleidungen (PE) nach einem der Ansprüche 1 bis 9, wobei die Auskleidung mit einer elektrisch leitenden Unterschicht laminiert oder co-extrudiert wird.

11. Verfahren zur Herstellung einer Geomembranauskleidungen aus mehrschichtigem Polyethylen (PE) zum Einsatz bei Temperaturen bis 100 °C, wobei die Auskleidung eine Anzahl N co-extrudierter, gestapelter Schichten enthält, mit N≥2, wobei das Verfahren besteht aus:
a) Vermischen einer PE-Masterbatch-Zusammensetzung umfassend PE-Harz und Additiven, wobei die PE-Masterbatch-Zusammensetzung frei von säureneutralisierenden Verbindungen ist, mit einem Harz auf PE-Metallocen-Basis, das zur Familie des Polyethylenharzes mit erhöhter Temperaturbeständigkeit oder PE-RT gehört, um eine erste PE-Rezeptur zu bilden;
b) Wiederholung des Schritts a) (N-1) mal, um (N-1) PE-Rezepturen zu bilden; und
c) Co-extrusion der ersten PE-Rezeptur, gebildet in Schritt a) mit den (N-1) PE-Rezepturen gebildet in Schritt b) um die mehrlagigen Polyethylengeomembranauskleidungen (PE) zu bilden.

12. Kundenspezifische mehrlagige Polyethylengeomembranauskleidungen (PE) zum Einsatz bei Temperaturen bis 100 °C, die ein Anzahl N co-extrudierter, gestapelter Schichten enthält, mit N≥2, wobei jede Schicht hergestellt wird aus:
einer PE-Masterbatch-Verbindung mit einem PE-Harz und Additiven, wobei der PE-Masterbatch frei von säureneutralisierenden Verbindungen ist, und
Harz auf PE-Metallocen-Basis, das zur Familie des Polyethylenharzes mit erhöhter Temperaturbeständigkeit oder PE-RT gehört,
wobei mindestens zwei der N Schichten spezifische Additive enthalten, die sich entweder nach ihrer Art oder Konzentration unterscheiden, um eine Geomembranauskleidung mit mindestens zwei Schichten mit unterschiedlichen Verhaltenseigenschaften bereitzustellen.

13. Verfahren zur Herstellung einer mehrlagigen Polyethylengeomembranauskleidung (PE) zum Einsatz bei Temperaturen bis 100 °C, wobei die Auskleidung eine Anzahl N co-extrudierter, gestapelter Schichten enthält, mit N≥2, wobei das Verfahren aus den folgenden Schritten besteht:
a) Vermischen einer PE-Masterbatch-Verbindung umfassend PE-Harz und Additiven, der PE-Masterbatch frei von säureneutralisierenden Verbindungen ist, mit einem Harz auf PE-Metallocen-Basis, das zur Familie des Polyethylens mit erhöhter Temperaturbeständigkeit oder PE-RT gehört, zur Bildung einer PE-Rezeptur;
b) Wiederholung des Schritts a) (N-1) mal, um (N-1) PE-Rezepturen zu bilden; und
c) Co-extrusion der ersten PE-Rezeptur, gebildet in Schritt a) mit den (N-1)-Rezepturen gebildet in Schritt b) um die mehrschichtige Polyethylen (PE)-Geomembranauskleidungen zu bilden,
wobei mindestens eine der (N-1)-PE-Rezepturen mindestens ein spezifisches Additiv enthält, das eine Art und/ oder eine Konzentration haben, die in Abhängigkeit vom endgültigen Zweck der Geomembranauskleidung ausgewählt werden, zur kundenspezifischen Gestaltung der Geomembranauskleidung.

## Revendications

1. Revêtement en géomembrane de polyéthylène (PE) multicouche devant être utilisé à des températures jusqu'à 100 °C et comprenant un nombre N de couches empilées co-extrudées avec N ≥ 2, chaque couche étant composée de :
une quantité donnée d'une composition de mélange maître de PE comprenant une résine de PE et des additifs, le mélange maître de PE étant exempt de neutralisant d'acide, et
une quantité donnée d'une résine à base de PE métallocène, la résine à base de PE métallocène faisant partie de la famille de la résine de polyéthylène de température élevée ou PERT.

2. Revêtement en géomembrane de polyéthylène (PE) multicouche selon la revendication 1, dans lequel N ≥ 3.

3. Revêtement en géomembrane de polyéthylène (PE) multicouche selon la revendication 1, dans lequel chaque couche comprend :
- de 5 % à 15 % de la composition de mélange maître de PE comprenant :
d'environ 50 à environ 90 % en poids de la résine de PE,
d'environ 0,1 à environ 4 % en poids d'un antioxydant phénolique,
d'environ 0,05 à environ 3 % en poids d'un antioxydant de phosphite secondaire,
d'environ 0 à 5 % en poids d'au moins un stabilisant d'UV, et
jusqu'à 50 % en poids d'au moins un additif spécifique,
dans lequel les pourcentages en poids s'élèvent à 100 % et sont basés sur le poids total de la composition de mélange maître de PE ; et
- d'environ 85 à environ 95 % de la résine à base de PE métallocène ou de son mélange avec d'autres qualités de PE,
dans lequel les pourcentages en poids de la composition de mélange maître de PE et de la résine à base de PE métallocène ou de son mélange avec d'autres qualités de PE s'élèvent ensemble à 100 % du poids total du revêtement en géomembrane (de PE) multicouche.

4. Revêtement en géomembrane de polyéthylène (PE) multicouche selon la revendication 3, dans lequel la résine de PE dans le mélange maître de PE a une masse volumique de 0,910 à 0,960 g/cm³.

5. Revêtement en géomembrane de polyéthylène (PE) multicouche selon la revendication 3 ou 4, dans lequel la résine de PE dans le mélange maître de PE est choisie dans le groupe constitué du PE linéaire, basse densité (LLDPE), du PE basse densité (LDPE), du PE à densité moyenne (MDPE) et du PE haute densité (HDPE), facultativement à l'intérieur d'une catégorie de qualité métallocène, et facultativement dans la famille de la PERT.

6. Revêtement en géomembrane de polyéthylène (PE) multicouche selon l'une quelconque des revendications 3 à 5, dans lequel la résine à base de PE métallocène est une résine de métallocène - polyéthylène à densité moyenne ayant une masse volumique d'environ 0,941 g/cm³ selon la méthode d'essai ASTM D1505, ou une résine de métallocène - polyéthylène à densité moyenne ayant une masse volumique d'environ 0,938 g/cm³ selon la méthode d'essai ASTM D1505.

7. Revêtement en géomembrane de polyéthylène (PE) multicouche selon l'une quelconque des revendications 3 à 6, dans lequel le stabilisant d'UV est choisi parmi les amines encombrées de poids moléculaire élevé (HALS).

8. Revêtement en géomembrane de polyéthylène (PE) multicouche selon l'une quelconque des revendications 3 à 7, dans lequel l'au moins un additif spécifique est choisi parmi le noir de carbone et les particules de TiO₂.

9. Revêtement en géomembrane de polyéthylène (PE) multicouche selon l'une quelconque des revendications 1 à 8, dans lequel la composition de mélange maître de PE est exempte d'hydrotalcite.

10. Revêtement en géomembrane de polyéthylène (PE) multicouche selon l'une quelconque des revendications 1 à 9, dans lequel le revêtement est stratifié ou co-extrudé avec une sous-couche électroconductrice.

11. Procédé de fabrication d'un revêtement en géomembrane de polyéthylène (PE) multicouche devant être utilisé à des températures jusqu'à 100 °C, le revêtement comprenant un nombre N de couches empilées co-extrudées avec N ≥ 2, le procédé comprenant les étapes de :
a) mélange d'une composition de mélange maître de PE comprenant une résine de PE et des additifs, la composition de mélange maître de PE étant exempte de composés neutralisants d'acide, avec une résine à base de PE métallocène, la résine à base de PE métallocène faisant partie de la famille de la résine de polyéthylène de température élevée ou PERT pour former une première formulation de PE ;
b) répétition de l'étape a) (N-1) fois pour former (N-1) formulations de PE ; et
c) co-extrusion de la première formulation de PE formée à l'étape a) avec les (N-1) formulations de PE formées à l'étape b) pour former le revêtement en géomembrane de polyéthylène (PE) multicouche.

12. Revêtement personnalisé en géomembrane de polyéthylène (PE) multicouche devant être utilisé à des températures jusqu'à 100 °C et comprenant un nombre N de couches empilées co-extrudées avec N ≥ 2, chaque couche étant composée de :
une composition de mélange maître de PE comprenant une résine de PE et des additifs, le mélange maître de PE étant exempt de neutralisant d'acide ; et
une résine à base de PE métallocène, la résine à base de PE métallocène faisant partie de la famille de la résine de polyéthylène de température élevée ou PERT ;
dans lequel au moins deux des N couches comprennent des additifs spécifiques qui sont différents soit en nature soit en concentration afin de fournir un revêtement en géomembrane comportant au moins deux couches ayant des propriétés comportementales différentes.

13. Procédé de fabrication d'un revêtement personnalisé en géomembrane de polyéthylène (PE) multicouche devant être utilisé à des températures jusqu'à 100 °C, le revêtement comprenant un nombre N de couches empilées co-extrudées avec N ≥ 2, le procédé comprenant les étapes de :
a) mélange d'une composition de mélange maître de PE comprenant une résine de PE et des additifs, le mélange maître de PE étant exempt de neutralisant d'acide, avec une résine à base de métallocène, la résine à base de PE métallocène faisant partie de la famille de la résine de polyéthylène de température élevée ou PERT, pour former une formulation de PE ;
b) répétition de l'étape a) (N-1) fois pour former (N-1) formulations de PE ; et
c) co-extrusion de la première formulation de PE formée à l'étape a) avec les (N-1) formulations formées à l'étape b) pour former le revêtement en géomembrane de polyéthylène (PE) multicouche,
dans lequel au moins l'une des (N-1) formulations de PE comprend au moins un additif spécifique présentant une nature et/ou une concentration choisie en fonction d'une utilité finale du revêtement en géomembrane afin de personnaliser le revêtement en géomembrane.
